# EUROPEAN PATENT APPLICATION

(11) **EP 1 419 917 A1**
(43) Date of publication of application: **19.05.2004**
(21) Application number: 02079836.9
(22) Date of filing: 18.11.2002
(51) Int. Cl.: B60J 7/00

(54) **Sunshade and open roof construction comprising such a sunshade**

(71) Applicant: Inalfa Roof Systems Group B.V., 5804 AH Venray (NL)
(72) Inventor: Jans, Leonardus Antonius Mathilde, 5803 MA Venray (NL)
(74) Representative: Voncken, Bartholomeus Maria Christiaan

(57) **Abstract**

A sunshade for use in an open roof construction for a vehicle comprises a flexible sunshade screen and two spaced, parallel guides for receiving and guiding two parallel lateral edges of the sunshade screen. Each of said lateral edges of the sunshade screen comprises loop-shaped provisions. Each guide comprises a longitudinal channel which opens towards the sunshade screen through a longitudinal slot. A core member is positioned in the channel and extends therein such, that between the core member and the surrounding guide a space is defined for slidingly receiving the loop-shaped provisions. The slot has a width which is smaller than the combined width of the core member with surrounding loop-shaped provisions.

## Description

In a first aspect the present invention relates to a sunshade for use in an open roof construction for a vehicle, comprising a flexible sunshade screen and two spaced, parallel guides for receiving and guiding two parallel lateral edges of the sunshade screen.

On the one hand the cooperation between the guides and the lateral edges of the sunshade screen should be such, that the sunshade screen can move relative to the guides without too great an effort. On the other hand, however, it should be prevented that the lateral edges of the sunshade screen get disengaged from the guides, as well during a movement of the sunshade screen as during a stationary position thereof. A sliding movement of the sunshade screen often is obtained by manually engaging a forward edge of the sunshade screen and moving it in the desired direction. Such a manual engagement most times leads to eccentric forces acting on the sunshade screen, tending to distort it, which distortion leads to the lateral edges leaving the guides. In a stationary position of the sunshade screen external forces, such as wind pressure, also can lead to a distortion, with the same effects.

It is an object of the present invention to provide an improved sunshade, in which the above-mentioned drawbacks are eliminated in a simple, yet effective manner.

Thus, in accordance with the present invention, there is provided a sunshade for use in an open roof construction for a vehicle, comprising a flexible sunshade screen and two spaced, parallel guides for receiving and guiding two parallel lateral edges of the sunshade screen, characterized in that each of said lateral edges of the sunshade screen comprises loop-shaped provisions, whereas each guide comprises a longitudinal channel which opens towards the sunshade screen through a longitudinal slot, wherein a core member is positioned in the channel and extends therein such, that between the core member and the surrounding guide a space is defined for slidingly receiving the loop-shaped provisions, and wherein the slot has a width which is smaller than the combined width of the core member with surrounding loop-shaped provisions.

The space defined between the core member and the surrounding guide can be dimensioned such, that the loop-shaped provisions can be accommodated therein with a wide fit (while surrounding the core member), thus enabling an easy sliding movement of the sunshade screen relative to the guides. However, when a distortion of the sunshade screen occurs, the loop-shaped provisions are tightened around the core member. Because, however, the combined width of the core member with surrounding loop-shaped provisions is larger then the width of the slot, the combination of core member with surrounding loop-shaped provisions can not be pulled out of the channel of the respective guide.

In a preferred embodiment of the sunshade according to the present invention, the core member is a solid cylindrical member, such as for example a rod. The opposite ends of the rod may be attached to the same part of the vehicle as the guides, for example the fixed roof of the vehicle. The core member may be flexible.

Further, in a preferred embodiment of the sunshade according to the present invention, all of the loop-shaped provisions of a lateral edge are combined as one tunnel-shaped provision. Thus, in this embodiment, the lateral edges of the sunshade screen do not comprise a succession of separate loop-shaped provisions, but each only one tunnel-shaped provision which, in most cases, will extend along the entire length of the sunshade screen.

When, in accordance with the above, loop-shaped provisions (such as a tunnel-shaped provision) are provided at each lateral edge of the sunshade screen, it is possible that the sunshade screen is folded back on to itself (and attached in any appropriate manner) at said lateral edges for defining said loop-shaped provisions for receiving the core members.

In accordance with a second aspect of the present invention there is provided an open roof construction for a vehicle, comprising a sunshade in accordance with the present invention.

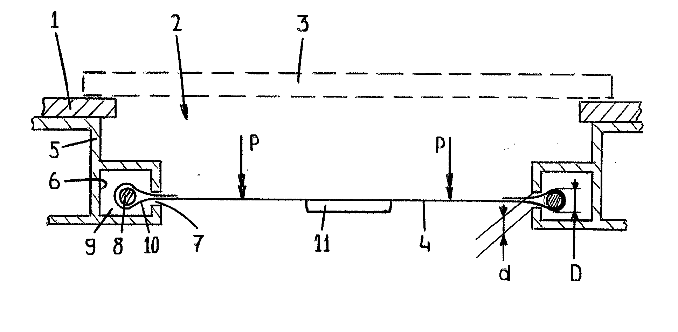

Hereinafter the invention will be elucidated referring to the drawing, in which, schematically, a transverse section is shown of a part of an open roof construction of a vehicle, provided with a sunshade according to the present invention.

Referring to the drawing, an open roof construction for a vehicle comprises a fixed roof 1 in which a roof opening 2 is provided. In a manner known per se, and not explained in detail here, a roof panel 3 is movable relative to the roof opening 2 for opening and closing the latter. Means for driving and guiding said roof panel 3 are not relevant for the present invention, and thus not shown.

Below the roof opening 2 a sunshade is provided. Basically, this sunshade comprises a flexible sunshade screen 4 and two spaced, parallel guides 5 for receiving and guiding two parallel lateral edges of the sunshade screen 4.

Each guide 5 comprises a longitudinal channel 6 which opens towards the sunshade screen 4 through a longitudinal slot 7. In the channel 6 a core member 8 is positioned which may be flexible.

As is clearly visible in the drawing, the guide 5 is attached to the fixed roof 1; the same may apply for the core member 8.

The core member 8 is positioned such in the channel 6 that between this core member 8 and the surrounding guide 5 a space 9 is defined with a function to be explained later.

At its two parallel lateral edges illustrated left and right in the drawing, the sunshade screen 4 is folded back onto itself for defining tunnel-shaped provisions 10. Preferably, these tunnel-shaped provisions extend (perpendicularly to the drawing) along the entire length of the sunshade screen 4.

The tunnel-shaped provisions 10 surround the core member 8 and thus extend longitudinally in the space 9 defined between the core member 8 and surrounding guide 5.

Preferably, the tunnel-shaped provisions 10 surround the core member 8 with a wide fit (as shown at the left-handed side of the drawing), such that a sliding movement of the sunshade screen 4 relative to the guide 5 and core member 8 within the space 9 is possible in an easy manner.

The guides 5 are dimensioned such that the combined width D of the core member 8 and tunnel-shaped provision 10 when tightened around said core member 8 (as shown at the right-handed side of the drawing) is larger then the width d of the slot 7 of the guides 5. Thus it is impossible that the lateral edges of the sunshade screen 4 can be pulled out of the channel 6 of the guides 5, for example when, for moving the sunshade screen 4, an eccentric force is created by manually engaging a grip 11 attached to the sunshade screen 4, or when wind pressure P acts on the sunshade screen 4.

The invention is not limited to the embodiment described before which may be varied widely within the scope of the invention as defined by the claims.

## Claims

1. Sunshade for use in an open roof construction for a vehicle, comprising a flexible sunshade screen and two spaced, parallel guides for receiving and guiding two parallel lateral edges of the sunshade screen, **characterized in that** each of said lateral edges of the sunshade screen comprises loop-shaped provisions, whereas each guide comprises a longitudinal channel which opens towards the sunshade screen through a longitudinal slot, wherein a core member is positioned in the channel and extends therein such, that between the core member and the surrounding guide a space is defined for slidingly receiving the loop-shaped provisions, and wherein the slot has a width which is smaller than the combined width of the core member with surrounding loop-shaped provisions.

2. Sunshade according to claim 1, wherein the core member is a solid cylindrical member, such as for example a rod.

3. Sunshade according to claim 1 or 2, wherein all of the loop-shaped provisions of a lateral edge are combined as one tunnel-shaped provision.

4. Sunshade according to any of claims 1-3, wherein the sunshade screen is folded back onto itself at said lateral edges for defining said loop-shaped provisions for receiving the core members.

5. Open roof construction for a vehicle, comprising a sunshade according to any of the previous claims.
